# EUROPEAN PATENT APPLICATION

(11) **EP 4 029 916 A1**
(43) Date of publication of application: **20.07.2022**
(21) Application number: 20862420.5
(22) Date of filing: 19.06.2020
(51) Int. Cl.: C08L 101/00, C09K 5/14

(54) **THERMAL CONDUCTIVITY IMPROVER, THERMAL CONDUCTIVITY IMPROVEMENT METHOD, THERMAL-CONDUCTIVE RESIN COMPOSITION AND THERMAL-CONDUCTIVE RESIN MOLDED PRODUCT**

(30) Priority: 10.09.2019 JP 2019164406
(71) Applicant: Kyowa Chemical Industry Co., Ltd, Takamatsu-shi, Kagawa 761-0113 (JP)
(72) Inventor: TAKAHASHI, Katsuhiro, Sakaide-shi, Kagawa 762-0012 (JP); IWAMOTO, Yoshihito, Sakaide-shi, Kagawa 762-0012 (JP)
(74) Representative: Winter, Brandl - Partnerschaft mbB
(86) International application number: PCT/JP2020/024187
(87) International publication number: WO 2021/049123

(57) **Abstract**

Provided is a resin composition having excellent thermal conductivity. The thermally conductive resin composition includes: a resin; a first thermally conductive filler having an aspect ratio of 10 or more and a long diameter of less than 30 µm; and a second thermally conductive filler having an aspect ratio of 2 or less.

## Description

### Technical Field

The present invention relates to a thermal conductivity improver, a thermal conductivity improvement method, a thermally conductive resin composition, and a thermally conductive resin molded product.

### Background Art

An electronic device, such as a personal computer or a cell phone, includes many built-in electronic parts. The electronic parts generate heat through driving of the electronic device to adversely affect the electronic device, and hence a heat-radiating body for radiating the heat of a heat-generating body is generally used. In addition, a thermally conductive member for conducting the heat of the heat-generating body to the heat-radiating body is also often used. The thermally conductive member is typically formed from a resin composition containing a thermally conductive filler (see, for example, Patent Literatures 1 to 4).

For example, for reasons of densification and thinning of electronic parts in recent years, the thermally conductive member has been required to be further improved in thermal conductivity.

### Citation List

### Patent Literature

[PTL 1] JP 2019-24045 A
[PTL 2] WO 2015/190324 A1
[PTL 3] JP 2014-234407 A
[PTL 4] JP 6490877 B1

### Summary of Invention

### Technical Problem

The present invention has been made in order to solve the above-mentioned problem, and an object of the present invention is to provide a resin composition having excellent thermal conductivity.

### Solution to Problem

According to one aspect of the present invention, there is provided a thermally conductive resin composition. The thermally conductive resin composition includes: a resin; a first thermally conductive filler having an aspect ratio of 10 or more and a long diameter of less than 30 µm; and a second thermally conductive filler having an aspect ratio of 2 or less.

In one embodiment, the first thermally conductive filler is formed of at least one selected from the group consisting of: magnesium oxide; magnesium hydroxide; and boron nitride.

In one embodiment, the second thermally conductive filler is formed of at least one selected from the group consisting of: magnesium oxide; magnesium hydroxide; and aluminum oxide.

In one embodiment, the first thermally conductive filler has a thickness of 10 nm or more and 200 nm or less.

In one embodiment, the long diameter of the first thermally conductive filler is 20 µm or less.

In one embodiment, the second thermally conductive filler has a particle diameter of 2 µm or more.

In one embodiment, the second thermally conductive filler has a particle diameter larger than the long diameter of the first thermally conductive filler.

In one embodiment, the thermally conductive resin composition includes 90 parts by weight or more and 700 parts by weight or less of the first thermally conductive filler and the second thermally conductive filler with respect to 100 parts by weight of the resin.

In one embodiment, a ratio of a content of the first thermally conductive filler to a content of the second thermally conductive filler (weight of first thermally conductive filler/weight of second thermally conductive filler) is 0.1 or more and 5 or less.

In one embodiment, a total volume ratio of the first thermally conductive filler and the second thermally conductive filler in the thermally conductive resin composition is 25% or more and 70% or less.

According to another aspect of the present invention, there is provided a thermally conductive resin molded product. The thermally conductive resin molded product is formed from the above-mentioned thermally conductive resin composition.

In one embodiment, the thermally conductive resin molded product has a sheet shape.

In one embodiment, a ratio of a heat conductivity of the thermally conductive resin molded product having a sheet shape in a thickness direction to a heat conductivity thereof in a plane direction (heat conductivity in thickness direction/heat conductivity in plane direction) is 0.5 or more.

According to yet another aspect of the present invention, there is provided a thermal conductivity improver. The thermal conductivity improver includes: a first thermally conductive filler having an aspect ratio of 10 or more and a long diameter of less than 30 µm; and a second thermally conductive filler having an aspect ratio of 2 or less.

According to still yet another aspect of the present invention, there is provided a thermal conductivity improvement method. The thermal conductivity improvement method includes using the above-mentioned thermal conductivity improver.

### Advantageous Effects of Invention

According to the present invention, excellent thermal conductivity can be achieved by combining the first thermally conductive filler having an aspect ratio of 10 or more and a long diameter of less than 30 µm with the second thermally conductive filler having an aspect ratio of 2 or less.

### Brief Description of Drawings

FIG. **1A** is a schematic view for illustrating a long diameter and a thickness.
FIG. **1B** is a schematic view for illustrating a long diameter and a thickness.
FIG. **2** is a cross-sectional SEM observation photograph of a molded product molded using a resin composition of Example 1.

### Description of Embodiments

Embodiments of the present invention are described below. However, the present invention is not limited to these embodiments.

### (Definitions of Terms)

The definitions of terms used herein are as described below.

### 1. Particle Diameter

A particle diameter is an average particle diameter in particle size distribution measurement.

### 2. Long Diameter

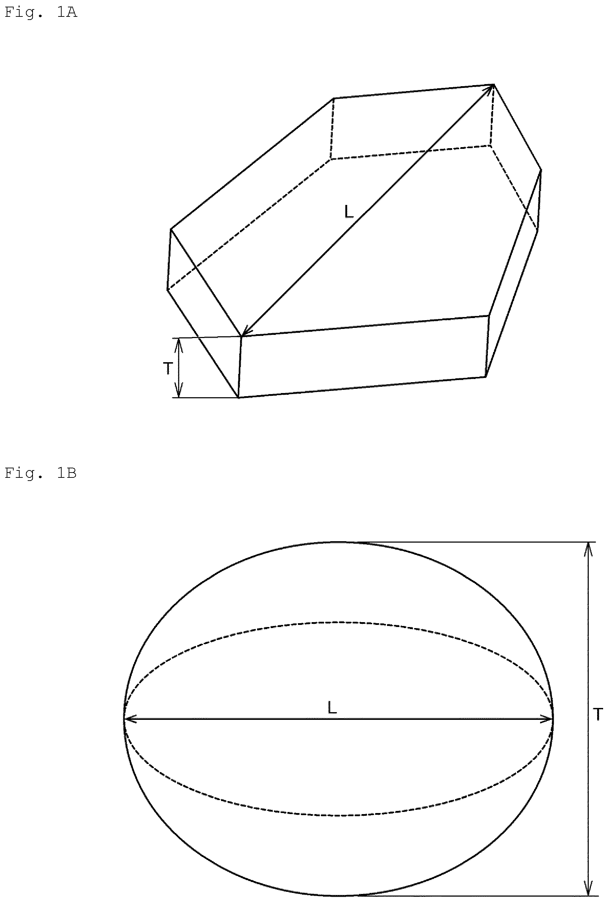

A long diameter is a value measured through scanning electron microscope (SEM) observation, and is the average value of the long diameters (e.g., **L** of FIG. **1A** and FIG. **1B**) of randomly selected primary particles. The "primary particles" are smallest particles observed with an SEM, and are distinguished from other aggregated particles (secondary particles).

### 3. Thickness

A thickness is a value measured through SEM observation, and is the average value of the thicknesses (e.g., **T** of FIG. **1A** and FIG. **1B**) of randomly selected primary particles.

### 4. Aspect Ratio (Long Diameter/Thickness)

An aspect ratio is a value calculated by dividing the long diameter by the thickness.

### A. Thermal Conductivity Improver

A thermal conductivity improver according to one embodiment of the present invention contains a first thermally conductive filler and a second thermally conductive filler.

### A-1. First Thermally Conductive Filler

The aspect ratio of the first thermally conductive filler is 10 or more, preferably 30 or more, more preferably 45 or more, still more preferably 55 or more, particularly preferably 65 or more. This is because of, for example, the following reason: the second thermally conductive filler to be described later can be easily dispersed between the first thermally conductive fillers to form thermal conduction paths. Meanwhile, the aspect ratio of the first thermally conductive filler is, for example, 200 or less, preferably 100 or less. Such first thermally conductive filler can be easily filled into a resin to be described later, and hence can be excellent in, for example, processability in the production of a thermally conductive resin composition to be described later.

The long diameter of the first thermally conductive filler is, for example, 0.5 µm or more, preferably 1 µm or more, more preferably 3 µm or more. This is because the thermal conduction paths can be satisfactorily formed. Meanwhile, the long diameter of the first thermally conductive filler is less than 30 µm, preferably 20 µm or less, more preferably 10 µm or less. Such first thermally conductive filler can be easily filled into the resin to be described later, and hence can be excellent in, for example, processability in the production of the thermally conductive resin composition to be described later.

The thickness of the first thermally conductive filler is, for example, 10 nm or more, preferably 20 nm or more, more preferably 50 nm or more. Such first thermally conductive filler can be easily filled into the resin to be described later, and hence can be excellent in, for example, processability in the production of the thermally conductive resin composition to be described later. Meanwhile, the thickness of the first thermally conductive filler is, for example, 200 nm or less, preferably 180 nm or less. This is because the thermal conduction paths can be satisfactorily formed.

The first thermally conductive filler may have any appropriate shape as long as the above-mentioned aspect ratio can be satisfied. Examples of the shape of the first thermally conductive filler include a flaky shape, a plate shape, a filmy shape, a fibrous shape, a cylindrical shape, a prism shape, an oval shape, and a flat shape. Of those, a flaky shape is preferably adopted. This is because the above-mentioned aspect ratio can be satisfactorily achieved. In addition, such first thermally conductive filler can have an isotropic heat conductivity in a plane direction, and hence can achieve excellent thermal conductivity. Specifically, when such first thermally conductive filler is used, in a thermally conductive resin molded product to be described later, channels between the fillers can be easily connected to each other (the thermal conduction paths can be easily formed), and hence excellent thermal conductivity can be achieved.

The first thermally conductive filler typically contains base particles. The first thermally conductive filler (base particles) may be formed of any appropriate material. The first thermally conductive filler (base particles) is typically formed of an insulating material. Examples of the material for forming the first thermally conductive filler (base particles) include: magnesium compounds, such as magnesium hydroxide and magnesium oxide; boron nitride; and aluminum hydroxide. In one embodiment, the first thermally conductive filler (base particles) is formed of at least one selected from the group consisting of: magnesium oxide; magnesium hydroxide; and boron nitride. Of those, magnesium hydroxide is preferred. When such material is used, for example, the above-mentioned long diameter and aspect ratio can be satisfactorily achieved. Specifically, particles having the above-mentioned long diameter and aspect ratio can be satisfactorily prepared. In addition, such material is also excellent in terms of cost, and can also contribute to an improvement in flame retardancy.

The base particles are preferably subjected to surface treatment. Specifically, the base particles are preferably subjected to surface treatment using any appropriate surface treatment agent. As the surface treatment agent, there is used, for example, at least one selected from the group consisting of: a higher fatty acid; an anionic surfactant; a phosphoric acid ester; a coupling agent; an ester of a polyhydric alcohol and a fatty acid; an acrylic polymer; and a silicone treatment agent.

Examples of the higher fatty acid include higher fatty acids each having 10 or more carbon atoms, such as stearic acid, erucic acid, palmitic acid, lauric acid, and behenic acid, and alkali metal salts of these higher fatty acids.

Examples of the anionic surfactant include a sulfuric acid ester salt of a higher alcohol, such as stearyl alcohol or oleyl alcohol, and a sulfuric acid ester salt, amide-bonded sulfuric acid ester salt, ester-bonded sulfuric acid ester salt, ester-bonded sulfonate, amide-bonded sulfonic acid salt, ether-bonded sulfonic acid salt, ether-bonded alkyl aryl sulfonic acid salt, ester-bonded alkyl aryl sulfonic acid salt, or amide-bonded alkyl aryl sulfonic acid salt of polyethylene glycol ether.

Examples of the phosphoric acid ester include a phosphoric acid monoester and a phosphoric acid diester each obtained by dehydration condensation of orthophosphoric acid and an alcohol, such as oleyl alcohol or stearyl alcohol, or a mixture thereof, and an alkali metal salt or amine salt thereof.

Examples of the coupling agent include: silane coupling agents, such as vinylethoxysilane, vinyl-tris(2-methoxy-ethoxy)silane, γ-methacryloxypropyltrimethoxysilane, γ-aminopropyltrimethoxysilane, β-(3, 4-epoxycyclohexyl)ethyltrimethoxysilane, γ-glycidoxypropyltrimethoxysilane, and γ-mercaptopropyltrimethoxysilane; titanate-based coupling agents, such as isopropyl triisostearoyl titanate, isopropyl tris(dioctylpyrophosphate)titanate, isopropyl tri(N-aminoethyl-aminoethyl)titanate, and isopropyl tridecylbenzenesulfonyl titanate; and aluminum-based coupling agents, such as acetoalkoxyaluminum diisopropylate.

Examples of the ester of a polyhydric alcohol and a fatty acid include glycerin monostearate and glycerin monooleate.

Any appropriate method may be adopted as a method for the surface treatment of the base particles. Specifically, a wet method may be adopted, or a dry method may be adopted. When the wet method is adopted, for example, the following method is used: the surface treatment agent is added in a liquid or dispersion state to a slurry of the base particles, and is mixed therewith. In this case, the mixing may be performed under heating (to, for example, 100°C or less). A method for the mixing is not particularly limited, and for example, the mixing may be mechanically performed. When the dry method is adopted, for example, the following method is used: while the base particles (powder) are stirred using a mixing machine, such as a Henschel mixer, the surface treatment agent is added thereto in a liquid, solid, or dispersion state, and is mixed therewith under heating or no heating.

The use amount of the surface treatment agent is preferably 10 wt% or less of the base particles, and is more preferably from 1.0 wt% to 8.0 wt%, particularly preferably from 1.0 wt% to 3.0 wt%. By virtue of such ranges, for example, the filler is improved in dispersibility without being reduced in thermal conductivity, and hence the thermally conductive resin molded product to be described later can be satisfactorily molded.

After the surface treatment, the base particles may be subjected to any appropriate other treatment as required. Examples of the other treatment include water washing, dehydration, granulation, drying, pulverization, and classification.

The surface treatment may also be performed for base particles each having formed thereon a coating layer to be described later. In this case, at least one selected from the group consisting of: a higher fatty acid; an anionic surfactant; a phosphoric acid ester; a coupling agent; and an ester of a polyhydric alcohol and a fatty acid is preferably used as the surface treatment agent to be used for the surface treatment.

The first thermally conductive filler may have a coating layer formed on the surface of each of the base particles. The coating layer may be formed by allowing any appropriate coating agent to act on the base particles.

In one embodiment, a coating layer having acid resistance is formed on the surface of each of the base particles in order to improve the acid resistance of the first thermally conductive filler. The coating layer having acid resistance contains, for example, an oxide or hydroxide of at least one element selected from the group consisting of: silicon; aluminum; titanium; zirconium; zinc; and boron. The coating layer having acid resistance preferably contains an oxide of silicon and/or a hydroxide of silicon. In this case, the coating layer may be formed by, for example, allowing any one of silicic acid and soluble salts thereof to act as the coating agent on the base particles.

The use amount of the coating agent is preferably 2 wt% or less of the base particles, and is more preferably from 0.01 wt% to 1.5 wt%, particularly preferably from 0.01 wt% to 1.0 wt%.

### A-2. Second Thermally Conductive Filler

The aspect ratio of the second thermally conductive filler is 2 or less. Specifically, the aspect ratio of the second thermally conductive filler is 1 or more and 2 or less. The use of such second thermally conductive filler can, through its interposition between the first thermally conductive fillers, form thermal conduction paths satisfactorily (e.g., in various directions). As a result, excellent thermal conductivity can be achieved. Specifically, in the thermally conductive resin molded product to be described later, excellent thermal conductivity (e.g., thermal conductivity in a thickness direction) can be achieved. In addition, such second thermally conductive filler is excellent in filling property into the resin to be described later, and hence can be excellent in, for example, processability in the production of the thermally conductive resin composition to be described later.

The particle diameter of the second thermally conductive filler is preferably 2 µm or more, more preferably 5 µm or more, still more preferably 10 µm or more, particularly preferably 20 µm or more. The use of such second thermally conductive filler can, through its interposition between the first thermally conductive fillers, form thermal conduction paths satisfactorily (e.g., in various directions). For example, the alignment of the first thermally conductive filler can be disturbed. As a result, excellent thermal conductivity can be achieved. Specifically, in the thermally conductive resin molded product to be described later, excellent thermal conductivity (e.g., thermal conductivity in the thickness direction) can be achieved. In addition, the effect resulting from the combination with the first thermally conductive filler can be more remarkably obtained. In one embodiment, the particle diameter of the second thermally conductive filler is larger than the long diameter of the first thermally conductive filler. Meanwhile, the particle diameter of the second thermally conductive filler is preferably 100 µm or less, more preferably 70 µm or less. Such second thermally conductive filler is excellent in filling property into the resin to be described later, and hence can be excellent in, for example, processability in the production of the thermally conductive resin composition to be described later.

The second thermally conductive filler may have any appropriate shape as long as the above-mentioned aspect ratio can be satisfied. Examples of the shape of the second thermally conductive filler include a spherical shape, an aggregate shape, a flaky shape, a plate shape, a filmy shape, a cylindrical shape, a prism shape, an oval shape, and a flat shape. Of those, a spherical shape is preferably adopted. The use of such second thermally conductive filler can, through its interposition between the first thermally conductive fillers, form thermal conduction paths satisfactorily (e.g., in various directions). As a result, excellent thermal conductivity can be achieved. Specifically, in the thermally conductive resin molded product to be described later, excellent thermal conductivity (e.g., thermal conductivity in the thickness direction) can be achieved.

The second thermally conductive filler typically contains base particles. The second thermally conductive filler (base particles) may be formed of any appropriate material. The second thermally conductive filler (base particles) is typically formed of an insulating material. Examples of the material for forming the second thermally conductive filler (base particles) include: magnesium compounds, such as magnesium hydroxide, magnesium oxide, and magnesium carbonate; aluminum compounds, such as aluminum oxide and aluminum nitride; boron nitride; and silica. In one embodiment, the second thermally conductive filler (base particles) is formed of at least one selected from the group consisting of: magnesium hydroxide; magnesium oxide; and aluminum oxide. Of those, magnesium oxide and aluminum oxide are preferred, and magnesium oxide is more preferred. This is because those materials are each fit to be interposed between the first thermally conductive fillers (for example, can satisfactorily achieve the above-mentioned shape), thereby enabling excellent thermal conductivity to be achieved. In addition, those materials can also be excellent in terms of cost.

As with the first thermally conductive filler, the base particles of the second thermally conductive filler may be subjected to surface treatment. In addition, a coating layer may be formed thereon. Details of the surface treatment and the coating layer are as described above.

### A-3. Content Ratio

In the thermal conductivity improver, the ratio of the content of the first thermally conductive filler to the content of the second thermally conductive filler (weight of first thermally conductive filler/weight of second thermally conductive filler) is preferably 0.1 or more. By virtue of such content ratio, in the thermally conductive resin molded product to be described later, channels of the first thermally conductive filler and the second thermally conductive filler are easily connected to each other, and hence excellent thermal conductivity (e.g., thermal conductivity in the thickness direction) can be achieved. In one embodiment, the content ratio is preferably 0.2 or more, more preferably 0.3 or more.

The ratio of the content of the first thermally conductive filler to the content of the second thermally conductive filler is preferably 5 or less. By virtue of such content ratio, in the thermally conductive resin molded product to be described later, channels of the second thermally conductive filler connecting the first thermally conductive fillers to each other are sufficiently formed, and hence excellent thermal conductivity (e.g., thermal conductivity in the thickness direction) can be achieved. In addition, the thermally conductive resin molded product to be described later can be satisfactorily molded. In one embodiment, the content ratio is preferably 0.8 or less, more preferably 0.6 or less.

### A-4. Others

The thermal conductivity improver may contain other components. For example, optional components to be described later are adopted as the other components.

### A-5. Use Method

A thermal conductivity improvement method according to one embodiment of the present invention includes using the thermal conductivity improver. Specifically, the thermal conductivity improver is incorporated into an object to be improved in thermal conductivity. For example, the thermal conductivity improver is incorporated into a resin. A thermally conductive resin composition containing a resin and the thermal conductivity improver is described below.

### B. Thermally Conductive Resin Composition

A thermally conductive resin composition according to one embodiment of the present invention contains a resin, the first thermally conductive filler, and the second thermally conductive filler.

### B-1. Resin

Any appropriate resin may be selected as the resin in accordance with, for example, applications of the thermally conductive resin composition to be obtained. Examples of the resin include polyethylene, polypropylene, ethylene-α-olefin copolymers, such as an ethylene-propylene copolymer, polymethylpentene, polyvinyl chloride, polyvinylidene chloride, polyvinyl acetate, an ethylene-vinyl acetate copolymer, polyvinyl alcohol, polyacetal, fluorine-based resins, such as polyvinylidene fluoride and polytetrafluoroethylene, polyethylene terephthalate, polybutylene terephthalate, polyethylene naphthalate, polystyrene, polyacrylonitrile, a styrene-acrylonitrile copolymer, an acrylonitrile-butadienestyrene copolymer (ABS) resin, polyphenylene ether, modified polyphenylene ether, aliphatic polyamides, aromatic polyamides, polyamide imide, polymethacrylic acid or esters thereof, polyacrylic acid or esters thereof, polycarbonate, polyphenylene sulfide, polysulfone, polyethersulfone, polyethernitrile, polyetherketone, polyketone, a liquid crystal polymer, a silicone resin, and an ionomer. In addition, examples thereof also include styrene-based thermoplastic elastomers, such as a styrene-butadiene copolymer and hydrogenated polymers thereof and a styrene-isoprene block copolymer and hydrogenated polymers thereof, olefin-based thermoplastic elastomers, vinyl chloride-based thermoplastic elastomers, polyester-based thermoplastic elastomers, polyurethane-based thermoplastic elastomers, and polyamide-based thermoplastic elastomers. Further, examples thereof also include a silicone rubber, an acrylic rubber, a butyl rubber, a fluorine rubber, a nitrile rubber, and a hydrogenated nitrile rubber. Those resins may be used alone or in combination thereof.

In one embodiment, a silicone rubber is preferably used as the resin. This is because, when the thermally conductive resin composition is turned into a molded product, the molded product can be excellent in flexibility, shape-following property, adhesiveness (e.g., adhesiveness to a heat-generating body, such as an electronic part), and heat resistance.

The thermally conductive resin composition may contain a crosslinking agent for the resin. In addition, the resin may be a crosslinked product crosslinked with a crosslinking agent. For example, when a silicone rubber is used as the resin, the crosslinking of a polymer having a silicone backbone (silicone) may be crosslinking with a peroxide, or may be addition reaction-type crosslinking. From the viewpoint of obtaining excellent heat resistance, crosslinking with a peroxide is preferably adopted.

Examples of the peroxide include benzoyl peroxide, dicumyl peroxide, 2,5-dimethyl-2,5-di(t-butylperoxy)hexane, dit-butyl peroxide, and t-butyl perbenzoate. Those peroxides may be used alone or in combination thereof. The use amount of the crosslinking agent is, for example, from 0.5 part by weight to 5 parts by weight with respect to 100 parts by weight of the resin. When the crosslinking agent is used, a crosslinking accelerator and a crosslinking accelerator aid may be used in combination therewith.

### B-2. Content Percentage (Content) of Thermally Conductive Fillers

The total content percentage of the first thermally conductive filler and the second thermally conductive filler in the thermally conductive resin composition is preferably 50 wt% or more, more preferably 60 wt% or more, particularly preferably 70 wt% or more. By virtue of such ranges, extremely excellent thermal conductivity can be achieved. Meanwhile, the total content percentage is preferably 95 wt% or less, more preferably 90 wt% or less. By virtue of such ranges, there can be obtained excellent processability in the production of the thermally conductive resin composition.

The thermally conductive resin composition contains preferably 90 parts by weight or more, more preferably 140 parts by weight or more, still more preferably 200 parts by weight or more, particularly preferably 250 parts by weight or more of the first thermally conductive filler and the second thermally conductive filler with respect to 100 parts by weight of the resin. Meanwhile, the thermally conductive resin composition contains preferably 700 parts by weight or less, more preferably 600 parts by weight or less of the first thermally conductive filler and the second thermally conductive filler with respect to 100 parts by weight of the resin. One of the features of the present invention is that excellent thermal conductivity can be achieved even when the filling ratio with respect to the resin is low (e.g., 300 parts by weight or less).

The total volume ratio of the first thermally conductive filler and the second thermally conductive filler in the thermally conductive resin composition is preferably 25% or more, more preferably 40% or more, particularly preferably 45% or more. By virtue of such ranges, extremely excellent thermal conductivity can be achieved. Meanwhile, the total volume ratio is preferably 70% or less, more preferably 65% or less. By virtue of such ranges, there can be obtained excellent processability in the production of the thermally conductive resin composition.

A content ratio between the first thermally conductive filler and the second thermally conductive filler in the thermally conductive resin composition is the same as the above-mentioned content ratio in the thermal conductivity improver.

The content percentage of the first thermally conductive filler in the thermally conductive resin composition is preferably 5 wt% or more. By virtue of such range, the first thermally conductive filler is satisfactorily aligned, and hence excellent thermal conductivity can be achieved. For example, channels between the fillers are easily connected to each other, and hence excellent thermal conductivity (e.g., thermal conductivity in the thickness direction) can be achieved. Meanwhile, the content percentage of the first thermally conductive filler in the thermally conductive resin composition is preferably 50 wt% or less. By virtue of such range, there can be obtained excellent processability in the production of the thermally conductive resin composition.

The thermally conductive resin composition contains preferably 20 parts by weight or more, more preferably 70 parts by weight or more of the first thermally conductive filler with respect to 100 parts by weight of the resin. Meanwhile, the thermally conductive resin composition contains preferably 140 parts by weight or less, more preferably 110 parts by weight or less of the first thermally conductive filler with respect to 100 parts by weight of the resin.

The content percentage of the second thermally conductive filler in the thermally conductive resin composition is preferably 20 wt% or more. By virtue of such range, channels between the fillers are easily connected to each other, and hence excellent thermal conductivity (e.g., thermal conductivity in the thickness direction) can be achieved. Meanwhile, the content percentage of the second thermally conductive filler is preferably 70 wt% or less. By virtue of such range, the content of the first thermally conductive filler is sufficiently secured, and hence excellent thermal conductivity can be achieved.

The thermally conductive resin composition contains preferably 50 parts by weight or more, more preferably 100 parts by weight or more of the second thermally conductive filler with respect to 100 parts by weight of the resin. Meanwhile, the thermally conductive resin composition contains preferably 500 parts by weight or less, more preferably 450 parts by weight or less of the second thermally conductive filler with respect to 100 parts by weight of the resin.

### B-3. Optional Components

As described above, the thermally conductive resin composition may contain optional components such as a crosslinking agent, a crosslinking accelerator, and a crosslinking accelerator aid. In addition, the thermally conductive resin composition may contain optional components such as a reinforcing agent, a filler, a softening agent, a plasticizer, an anti-aging agent, a tackifier, an antistatic agent, a kneading adhesive, a flame retardant, and a coupling agent. The content percentage of the optional components in the thermally conductive resin composition is, for example, from 0.05 wt% to 10 wt%.

### C. Thermally Conductive Resin Molded Product

A thermally conductive resin molded product according to one embodiment of the present invention is formed from the thermally conductive resin composition. Specifically, the thermally conductive resin molded product contains the resin, the first thermally conductive filler, and the second thermally conductive filler.

The shape (form) of the thermally conductive resin molded product is not particularly limited, but is typically a sheet shape (heat radiation sheet). In this case, the thickness of the heat radiation sheet is, for example, 200 µm or more, and is typically from 200 µm to 3 mm. In the heat radiation sheet, importance is put on its heat conductivity in a thickness direction in some cases. According to the present invention, an excellent heat conductivity in the thickness direction can be achieved. Specifically, the ratio of the heat conductivity of the heat radiation sheet in the thickness direction to its heat conductivity in a plane direction (heat conductivity in thickness direction/heat conductivity in plane direction) is preferably 0.5 or more, more preferably 0.7 or more. In one embodiment, the heat conductivity of the heat radiation sheet in the thickness direction is, for example, 0.70 W/m·K or more, preferably 0.85 W/m·K or more, more preferably 1.00 W/m·K or more, particularly preferably 1.20 W/m·K or more.

Any appropriate method may be adopted as a method of manufacturing the heat radiation sheet. In one embodiment, the resin, the first thermally conductive filler, the second thermally conductive filler, and as required, the optional components are mixed (kneaded), and the thus obtained thermally conductive resin composition is pressed, to thereby provide the heat radiation sheet. In another embodiment, the resin, the first thermally conductive filler, the second thermally conductive filler, and as required, the optional components are fed to an extruder and melt-kneaded, and the melt-kneaded product is extruded from the extruder, to thereby provide the heat radiation sheet. One of the features of the present invention is that excellent thermal conductivity can be achieved irrespective of the molding method for the molded product (method of manufacturing the heat radiation sheet).

### Examples

The present invention is specifically described below by way of Examples, but the present invention is not limited by these Examples. Measurement methods for characteristics are as described below unless otherwise stated.

### 1. Particle Diameter

A particle diameter was measured by a laser diffraction/scattering method (apparatus: Microtrac MT3000 manufactured by MicrotracBEL Corp.). A sample for measurement was prepared by adding 70 mL of a sodium hexametaphosphate solution (0.2%) to 0.7 g of a filler and then subjecting the mixture to ultrasonic treatment at 280 µA for 3 minutes.

### 2. Long Diameter

A long diameter was calculated through SEM observation. Specifically, the long diameters of ten primary particles randomly selected from an SEM photograph of a filler (particles) were measured, and the arithmetic average of the resultant measured values (average long diameter) was determined. The magnification of the SEM observation for the long diameter was set to 2,000 times for a first thermally conductive filler, and 500 times for a second thermally conductive filler.

### 3. Thickness

A thickness was calculated through SEM observation. Specifically, the thicknesses of ten primary particles randomly selected from an SEM photograph of a filler (particles) were measured, and the arithmetic average of the resultant measured values (average thickness) was determined. The magnification of the SEM observation for the thickness was set to 20,000 times for a first thermally conductive filler, and 500 times for a second thermally conductive filler.

### 4. Aspect Ratio

An aspect ratio was calculated through SEM observation. Specifically, the aspect ratio was calculated by dividing the average long diameter by the average thickness.

### [Example 1]

A silicone rubber ("TSE-201" manufactured by Momentive Performance Materials Inc.) was mixed with a first thermally conductive filler (flaky magnesium hydroxide particles having a long diameter of 4 µm, a thickness of 57 nm, and an aspect ratio of 70), a second thermally conductive filler ("PYROKISUMA 3320" manufactured by Kyowa Chemical Industry Co., Ltd., spherical magnesium oxide particles having a particle diameter of 20 µm and an aspect ratio of 1), and a crosslinking agent ("TC-8" manufactured by Momentive Performance Materials Inc.) at ratios of 90 parts by weight, 210 parts by weight, and 2 parts by weight, respectively, with respect to 100 parts by weight of the silicone rubber through use of a small twin-screw Plastomill (manufactured by Brabender GmbH & Co. KG) to provide a resin composition.

### [Example 2]

A resin composition was obtained in the same manner as in Example 1 except that the blending amount of the first thermally conductive filler was changed to 30 parts by weight, and the blending amount of the second thermally conductive filler was changed to 270 parts by weight.

### [Example 3]

A resin composition was obtained in the same manner as in Example 1 except that the blending amount of the first thermally conductive filler was changed to 120 parts by weight, and the blending amount of the second thermally conductive filler was changed to 180 parts by weight.

### [Example 4]

A resin composition was obtained in the same manner as in Example 1 except that magnesium oxide particles having a particle diameter of 3 µm and an aspect ratio of 1 ("PYROKISUMA 5301" manufactured by Kyowa Chemical Industry Co., Ltd.) were used as the second thermally conductive filler.

### [Example 5]

A resin composition was obtained in the same manner as in Example 1 except that spherical magnesium oxide particles having a particle diameter of 50 µm and an aspect ratio of 1 were used as the second thermally conductive filler.

### [Example 6]

A resin composition was obtained in the same manner as in Example 1 except that flaky magnesium hydroxide particles having a long diameter of 1.6 µm, a thickness of 32 nm, and an aspect ratio of 50 were used as the first thermally conductive filler.

### [Example 7]

A resin composition was obtained in the same manner as in Example 1 except that flaky magnesium hydroxide particles having a long diameter of 9 µm, a thickness of 150 nm, and an aspect ratio of 60 were used as the first thermally conductive filler.

### [Example 8]

A resin composition was obtained in the same manner as in Example 1 except that the blending amount of the first thermally conductive filler was changed to 100 parts by weight, and the blending amount of the second thermally conductive filler was changed to 400 parts by weight.

### [Example 9]

A resin composition was obtained in the same manner as in Example 1 except that the blending amount of the first thermally conductive filler was changed to 50 parts by weight, and the blending amount of the second thermally conductive filler was changed to 50 parts by weight.

### [Example 10]

A resin composition was obtained in the same manner as in Example 1 except that the blending amount of the first thermally conductive filler was changed to 100 parts by weight, and the blending amount of the second thermally conductive filler was changed to 50 parts by weight.

### [Example 11]

A resin composition was obtained in the same manner as in Example 1 except that spherical aluminum oxide particles having a particle diameter of 20 µm and an aspect ratio of 1 ("AS-20" manufactured by Showa Denko K.K.) were used as the second thermally conductive filler.

### [Comparative Example 1]

A resin composition was obtained in the same manner as in Example 1 except that the second thermally conductive filler was not blended, and the blending amount of the first thermally conductive filler was changed to 150 parts by weight.

### [Comparative Example 2]

A resin composition was obtained in the same manner as in Example 1 except that the first thermally conductive filler was not blended, and the blending amount of the second thermally conductive filler was changed to 300 parts by weight.

### [Comparative Example 3]

A resin composition was obtained in the same manner as in Comparative Example 2 except that magnesium oxide particles having a particle diameter of 3 µm and an aspect ratio of 1 ("PYROKISUMA 5301" manufactured by Kyowa Chemical Industry Co., Ltd.) were used as the second thermally conductive filler.

### [Comparative Example 4]

A resin composition was obtained in the same manner as in Comparative Example 2 except that spherical magnesium oxide particles having a particle diameter of 50 µm and an aspect ratio of 1 were used as the second thermally conductive filler.

### [Comparative Example 5]

A resin composition was obtained in the same manner as in Comparative Example 2 except that the blending amount of the second thermally conductive filler was changed to 100 parts by weight.

### [Comparative Example 6]

A resin composition was obtained in the same manner as in Comparative Example 2 except that the blending amount of the second thermally conductive filler was changed to 150 parts by weight.

### [Comparative Example 7]

A resin composition was obtained in the same manner as in Comparative Example 2 except that spherical aluminum oxide particles having a particle diameter of 20 µm and an aspect ratio of 1 ("AS-20" manufactured by Showa Denko K.K.) were used as the second thermally conductive filler.

### [Comparative Example 8]

An attempt was made to produce a resin composition in the same manner as in Example 1 except that the second thermally conductive filler was not blended, and the blending amount of the first thermally conductive filler was changed to 200 parts by weight. However, the resin composition was unable to be satisfactorily produced.

### <Evaluation Method>

The resin composition obtained in each of Examples and Comparative Examples was measured for its heat conductivity in accordance with ISO/CD 22007-2. Specifically, the obtained resin composition was subjected to press molding (primary crosslinking treatment) under the conditions of 170°C, 15 MPa, and 10 minutes to be molded into a disc shape measuring 7.5 mm thick by 30 mmϕ, followed by heating (secondary crosslinking treatment) in a gear oven under the conditions of 200°C and 4 hours, to thereby provide a sample for measurement having a disc shape measuring 7.5 mm thick by 30 mmϕ.

The resultant sample for measurement was measured for its heat conductivity in each of a thickness direction and a plane direction in the atmosphere at room temperature through use of a Hot Disk heat conductivity meter ("TPS-2500S" manufactured by Kyoto Electronics Manufacturing Co., Ltd.). In the measurement, a 6 mmϕ sensor was used.

The results of the measurement (the heat conductivity in the thickness direction, the heat conductivity in the plane direction, and the ratio of the heat conductivity in the thickness direction to the heat conductivity in the plane direction (heat conductivity in thickness direction/heat conductivity in plane direction)) are summarized in Table 1 and Table 2.

**Table 1**

| | | Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Resin | Blending amount (parts by weight) | 100 | 100 | 100 | 100 | 100 | 100 | 100 | 100 | 100 | 100 | 100 |
| Crosslinking agent | Blending amount (parts by weight) | 2 | 2 | 2 | 2 | 2 | 2 | 2 | 2 | 2 | 2 | 2 |
| First thermally conductive filler | Chemical formula | Mg(OH)₂ | Mg(OH)₂ | Mg(OH)₂ | Mg(OH)₂ | Mg(OH)₂ | Mg(OH)₂ | Mg(OH) ₂ | Mg(OH)₂ | Mg(OH) ₂ | Mg(OH)₂ | Mg(OH)₂ |
| | Long diameter (µm) | 4 | 4 | 4 | 4 | 4 | 1.6 | 9 | 4 | 4 | 4 | 4 |
| | Thickness (nm) | 57 | 57 | 57 | 57 | 57 | 32 | 150 | 57 | 57 | 57 | 57 |
| | Aspect ratio | 70 | 70 | 70 | 70 | 70 | 50 | 60 | 70 | 70 | 70 | 70 |
| | Blending amount (parts by weight) | 90 | 30 | 120 | 90 | 90 | 90 | 90 | 100 | 50 | 100 | 90 |
| | Blending percentage (%) | 22 | 7 | 30 | 22 | 22 | 22 | 22 | 17 | 25 | 40 | 22 |
| Second thermally conductive filler | Chemical formula | MgO | MgO | MgO | MgO | MgO | MgO | MgO | MgO | MgO | MgO | Al₂O₃ |
| | Particle diameter (µm) | 20 | 20 | 20 | 3 | 50 | 20 | 20 | 20 | 20 | 20 | 20 |
| | Aspect ratio | 1 | 1 | 1 | 1 | 1 | 1 | 1 | 1 | 1 | 1 | 1 |
| | Blending amount (parts by weight) | 210 | 270 | 180 | 210 | 210 | 210 | 210 | 400 | 50 | 50 | 210 |
| | Blending percentage (%) | 52 | 67 | 45 | 52 | 52 | 52 | 52 | 66 | 25 | 20 | 52 |
| Total blending amount of fillers (parts by weight) | | 300 | 300 | 300 | 300 | 300 | 300 | 300 | 500 | 100 | 150 | 300 |
| Blending ratio between fillers | | 0.43 | 0.11 | 0.67 | 0.43 | 0.43 | 0.43 | 0.43 | 0.25 | 1 | 2 | 0.43 |
| Total blending percentage of fillers (%) | | 75 | 75 | 75 | 75 | 75 | 75 | 75 | 83 | 50 | 60 | 75 |
| Total volume ratio of fillers (%) | | 49 | 46 | 50 | 49 | 49 | 49 | 49 | 60 | 26 | 36 | 49 |
| Heat conductivity (W/mK) | Thickness direction | 1. 43 | 1.29 | 1.34 | 1.28 | 1. 65 | 1.12 | 1.37 | 2.83 | 0.55 | 0.94 | 1.00 |
| | Plane direction | 1.97 | 1.43 | 2.34 | 1. 79 | 2.00 | 1. 97 | 1.77 | 2.72 | 0.85 | 1.41 | 1.91 |
| | Ratio (thickness/plane) | 0.73 | 0.90 | 0.57 | 0.72 | 0.82 | 0.57 | 0.77 | 1.04 | 0.65 | 0.67 | 0.52 |

**Table 2**

| | | Comparative Example | | | | | | |
|---|---|---|---|---|---|---|---|---|
| | | 1 | 2 | 3 | 4 | 5 | 6 | 7 |
| Resin | Blending amount (parts by weight) | 100 | 100 | 100 | 100 | 100 | 100 | 100 |
| Crosslinking agent | Blending amount (parts by weight) | 2 | 2 | 2 | 2 | 2 | 2 | 2 |
| First thermally conductive filler | Chemical formula | Mg(OH)₂ | - | - | - | - | - | - |
| | Long diameter (µm) | 4 | - | - | - | - | - | - |
| | Thickness (nm) | 57 | - | - | - | - | - | - |
| | Aspect ratio | 70 | - | - | - | - | - | - |
| | Blending amount (parts by weight) | 150 | - | - | - | - | - | - |
| | Blending percentage (%) | 60 | - | - | - | - | - | - |
| Second thermally conductive filler | Chemical formula | - | MgO | MgO | MgO | MgO | MgO | Al₂O₃ |
| | Particle diameter (µm) | - | 20 | 3 | 50 | 20 | 20 | 20 |
| | Aspect ratio | - | 1 | 1 | 1 | 1 | 1 | 1 |
| | Blending amount (parts by weight) | - | 300 | 300 | 300 | 100 | 150 | 300 |
| | Blending percentage (%) | - | 75 | 75 | 75 | 50 | 60 | 75 |
| Total blending amount of fillers (parts by weight) | | 150 | 300 | 300 | 300 | 100 | 150 | 300 |
| Total blending | percentage of fillers (%) | 60 | 75 | 75 | 75 | 50 | 60 | 75 |
| Total volume | ratio of fillers (%) | 38 | 45 | 45 | 45 | 21 | 29 | 45 |
| Heat conductivity (W/mK) | Thickness direction | 0.86 | 1.07 | 1.16 | 1.25 | 0.39 | 0.52 | 0.83 |
| | Plane direction | 2.30 | 1.26 | 1.20 | 1.35 | 0.40 | 0.57 | 0.96 |
| | Ratio (thickness/plane) | 0.37 | 0.85 | 0.97 | 0.92 | 0.98 | 0.91 | 0.86 |

It is found from Table 1 and Table 2 that excellent thermal conductivity is obtained by combining the first thermally conductive filler and the second thermally conductive filler.

In Comparative Example 1, the heat conductivity in the thickness direction is much lower than the heat conductivity in the plane direction. This is conceivably because the filler was aligned by molding.

For example, in each of Examples 1 to 3, the heat conductivity is high not only in the plane direction but also in the thickness direction as compared to Comparative Example 2. Such significant improvement in heat conductivity in the thickness direction by replacing part of the filler used in Comparative Example 2 with the filler used in Comparative Example 1, which alone has a low heat conductivity in the thickness direction, can be said to be an unexpected excellent effect.

In Example 8, in which the fillers are blended at a high percentage, the heat conductivity in the thickness direction is higher than the heat conductivity in the plane direction.

### <SEM Observation>

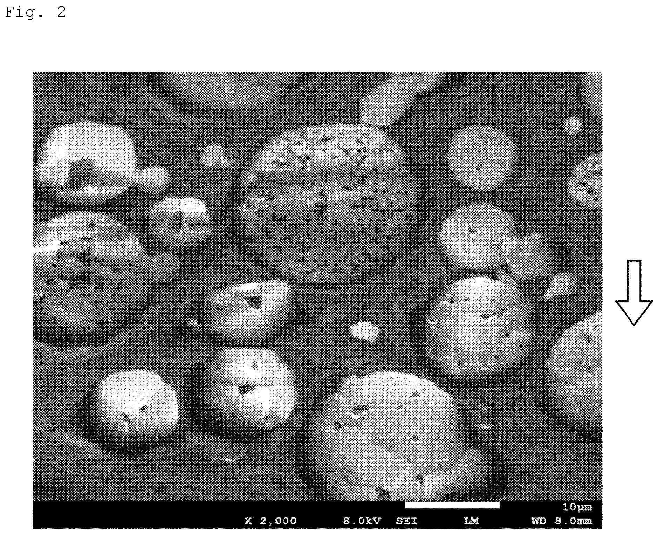

A molded product molded using the resin composition of Example 1 was subjected to cross-sectional SEM observation (at a magnification of 2,000). The result (image of a resin cross-section) is shown in FIG. 2. The molded product after the heat conductivity measurement described above was used as a sample for measurement in the cross-sectional SEM observation. The cutting of the molded product was performed using a cross-sectional sample production apparatus ("IB-09010CP" manufactured by JEOL Ltd.). Specifically, in an argon gas atmosphere, a cross-section was cut out by irradiating the molded product with an ion beam at an output of 5.5 kV for 4 hours.

The arrow shown in FIG. 2 indicates a pressing direction in the molding of the sample for measurement. Specifically, the sample for measurement is a molded product molded through pressing from top to bottom in FIG. 2. It is found that, irrespective of the pressing direction, the flaky filler is aligned in various directions around the spherical filler having a large particle diameter. In the case of using only the flaky filler (e.g., in Comparative Example 1), the flaky filler is aligned in a lateral direction (pressing surface).

### Reference Signs List

- **L.**: long diameter
- **T.**: thickness

## Claims

1. A thermally conductive resin composition, comprising:
a resin;
a first thermally conductive filler having an aspect ratio of 10 or more and a long diameter of less than 30 µm; and
a second thermally conductive filler having an aspect ratio of 2 or less.

2. The thermally conductive resin composition according to claim 1, wherein the first thermally conductive filler is formed of at least one selected from the group consisting of: magnesium oxide; magnesium hydroxide; and boron nitride.

3. The thermally conductive resin composition according to claim 1 or 2, wherein the second thermally conductive filler is formed of at least one selected from the group consisting of: magnesium oxide; magnesium hydroxide; and aluminum oxide.

4. The thermally conductive resin composition according to any one of claims 1 to 3, wherein the first thermally conductive filler has a thickness of 10 nm or more and 200 nm or less.

5. The thermally conductive resin composition according to any one of claims 1 to 4, wherein the long diameter of the first thermally conductive filler is 20 µm or less.

6. The thermally conductive resin composition according to any one of claims 1 to 5, wherein the second thermally conductive filler has a particle diameter of 2 µm or more.

7. The thermally conductive resin composition according to any one of claims 1 to 6, wherein the second thermally conductive filler has a particle diameter larger than the long diameter of the first thermally conductive filler.

8. The thermally conductive resin composition according to any one of claims 1 to 7, wherein the thermally conductive resin composition comprises 90 parts by weight or more and 700 parts by weight or less of the first thermally conductive filler and the second thermally conductive filler with respect to 100 parts by weight of the resin.

9. The thermally conductive resin composition according to any one of claims 1 to 8, wherein a ratio of a content of the first thermally conductive filler to a content of the second thermally conductive filler (weight of first thermally conductive filler/weight of second thermally conductive filler) is 0.1 or more and 5 or less.

10. The thermally conductive resin composition according to any one of claims 1 to 9, wherein a total volume ratio of the first thermally conductive filler and the second thermally conductive filler is 25% or more and 70% or less.

11. A thermally conductive resin molded product, which is formed from the thermally conductive resin composition of any one of claims 1 to 10.

12. The thermally conductive resin molded product according to claim 11, wherein the thermally conductive resin molded product has a sheet shape.

13. The thermally conductive resin molded product according to claim 12, wherein a ratio of a heat conductivity of the thermally conductive resin molded product in a thickness direction to a heat conductivity thereof in a plane direction (heat conductivity in thickness direction/heat conductivity in plane direction) is 0.5 or more.

14. A thermal conductivity improver, comprising:
a first thermally conductive filler having an aspect ratio of 10 or more and a long diameter of less than 30 µm; and
a second thermally conductive filler having an aspect ratio of 2 or less.

15. A thermal conductivity improvement method, comprising using the thermal conductivity improver of claim 14.
